# EUROPEAN PATENT APPLICATION

(11) **EP 1 462 313 A1**
(43) Date of publication of application: **29.09.2004**
(21) Application number: 04007395.9
(22) Date of filing: 26.03.2004
(51) Int. Cl.: B60Q 1/48

(54) **Parking assist apparatus**

(30) Priority: 28.03.2003 JP 2003092740
(71) Applicant: Aisin Seiki Kabushiki Kaisha, Kariya-shi, Aichi-ken 448-8650 (JP)
(72) Inventor: Tanaka, Yuu, Aichi-gun Aichi-ken (JP); Iwata, Yoshifumi, Anjo-shi Aichi-ken (JP); Iwakiri, Hideyuki, Toyota-shi Aichi, 471-8571 (JP); Satonaka, Hisashi, Toyota-shi Aichi, 471-8571 (JP); Kubota, Yuichi, Toyota-shi Aichi, 471-8571 (JP); Endo, Tomohiko, Toyota-shi Aichi, 471-8571 (JP); Matsui, Akira, Toyota-shi Aichi, 471-8571 (JP); Sugiyama, Toru, Toyota-shi Aichi, 471-8571 (JP); Kawakami, Seiji, Toyota-shi Aichi, 471-8571 (JP); Iwazaki, Katsuhiko, Toyota-shi Aichi, 471-8571 (JP); Kataoka, Hiroaki, Toyota-shi Aichi, 471-8571 (JP)
(74) Representative: Leson, Thomas Johannes Alois, Dipl.-Ing.

(57) **Abstract**

A parking assist apparatus including a target parking position setting means for setting a target parking position in which a vehicle is desired to be parked by an operation on a display for a position setting appearing on an actual image that shows vehicle surroundings and a traveling locus calculating means for calculating a traveling locus to the target parking position set by the target parking position setting means for performing a parking assist to guide the vehicle along the traveling locus characterized in that the parking assist apparatus further comprises further includes a memory means for keeping storing an information of the traveling locus being generated at a time immediately before a resetting of the target parking position is performed until a new traveling locus to a new target parking position is generated by the calculation of the traveling locus calculating means under a condition that the parking assist is once started based on the traveling locus initially generated by the calculation of the traveling locus calculating means and when the resetting of the target parking position is performed by the target parking position setting means before the vehicle reaches the target parking position being initially set.

## Description

### FIELD OF THE INVENTION

This invention generally relates to a parking assist apparatus. More particularly, this invention pertains to a parking assist apparatus for calculating a traveling locus of a vehicle to a target parking position being set by a driver and performing a parking assist based on the calculated traveling locus.

### BACKGROUND OF THE INVENTION

One example of a known parking assist apparatus is disclosed in Japanese Patent Laid-Open Publication No. H11-208420. The disclosed parking assist apparatus calculates a traveling locus to a target parking position being set by a driver through a display appearing on an image that shows vehicle surroundings and guides the vehicle along the calculated traveling locus. According to the disclosed parking assist apparatus, when the target parking position is changed by an operation on the display on the image, a new traveling locus to that changed target parking position is set. Then, the vehicle is guided along the new traveling locus. Thus, according to the disclosed parking assist apparatus, the vehicle may be guided along the new traveling locus in case that the target parking position is newly set.

According to the disclosed parking assist apparatus, however, the traveling locust to the newly set target parking position is constantly calculated even if the target parking position being set at a time immediately before the resetting is performed is positioned in the vicinity of the newly set target parking position. Then, the parking assist control is performed based on the newly calculated traveling locus. In this case, the traveling locus is calculated even though the traveling loci before and after the resetting are hardly different. As a result, the parking assist control based on the traveling locus along which the vehicle should be guided may not be promptly performed.

In addition, when the resetting of the target parking position is performed, an effective traveling locus may not be generated due to the restriction on calculation of the traveling locus even if the vehicle is positioned on the traveling locus being initially generated. In this case, when the information of the target parking position and the traveling locus thereto being set at a time immediately before the resetting is performed is deleted, the parking assist is impossible to be continued even if the vehicle driver desires to resume and continue the parking assist based on the initially calculated traveling locus, i.e. the traveling locus being generated at a time immediately before the resetting is performed. The vehicle driver is required to set another target parking position accordingly.

Thus, a need exists for a parking assist apparatus that can continue the parking assist based on the traveling locus to the target parking position being set at a time immediately before the resetting is performed even after the new target parking position is set.

### SUMMARY OF THE INVENTION

According to an aspect of the present invention, a parking assist apparatus including a target parking position setting means for setting a target parking position in which a vehicle is desired to be parked by an operation on a display for a position setting appearing on an actual image that shows vehicle surroundings and a traveling locus calculating means for calculating a traveling locus to the target parking position set by the target parking position setting means for performing a parking assist to guide the vehicle along the traveling locus characterized in that the parking assist apparatus further comprises further includes a memory means for keeping storing an information of the traveling locus being generated at a time immediately before a resetting of the target parking position is performed until a new traveling locus to a new target parking position is generated by the calculation of the traveling locus calculating means under a condition that the parking assist is once started based on the traveling locus initially generated by the calculation of the traveling locus calculating means and when the resetting of the target parking position is performed by the target parking position setting means before the vehicle reaches the target parking position being initially set.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements.
Fig. 1 is a system block diagram of a parking assist apparatus mounted on a vehicle according to an embodiment of the present invention;
Fig. 2A is a view of an image displayed on a screen when a target parking position for a garage parking is set according to the embodiment of the present invention;
Fig. 2B is a view of the image displayed on the screen when the target parking position for a parallel parking is set according to the embodiment of the present invention;
Fig 3 is a view showing a traveling locus to the target parking position at the garage parking;
Fig. 4 is a view showing the traveling locus to the target parking position at the parallel parking;
Fig. 5 is a view of the image displayed on the screen when the vehicle moves along the traveling locus to the target parking position; and
Fig. 6 is a flowchart of a control routine performed in the parking assist apparatus according to the embodiment of the present invention.

### DETAILED DESCRIPTION OF THE INVENTION

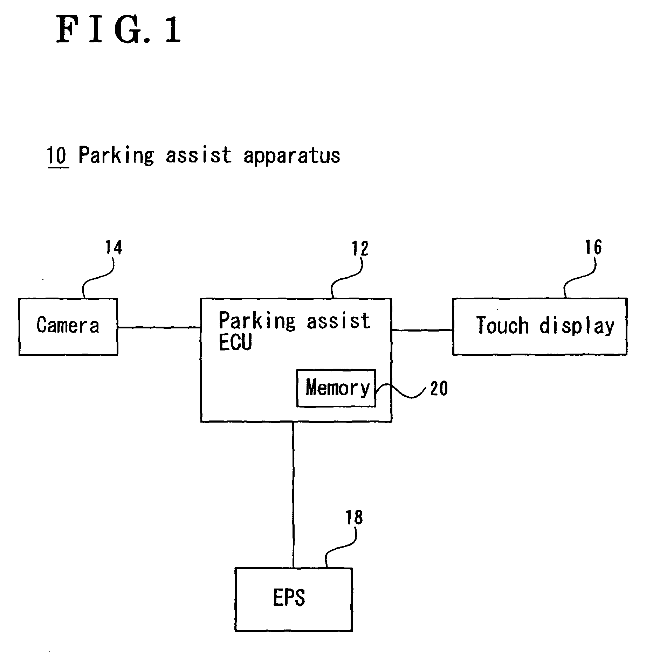

An embodiment of the present invention is explained referring to attached drawings. Fig. 1 is a system block diagram of a parking assist apparatus 10 mounted on a vehicle according to the embodiment of the present invention. The parking assist apparatus 10 controls to steer the vehicle automatically without an operation of a vehicle driver at a time of garage parking and parallel parking so that the vehicle is guided along a traveling locus to a target parking position being set by the vehicle driver (herein after called "parking assist control").

As shown in Fig. 1, the parking assist apparatus 10 includes an electronic control unit for parking assist 12 (hereinafter called "parking assist ECU") and is controlled thereby. A rearward monitoring camera 14 (hereinafter called "camera") is connected to the parking assist ECU 12. The camera 14 is disposed at a center of a vehicle rear portion and takes images rearward of the vehicle within a predetermined angle range. The image information of the camera 14 is supplied to the parking assist ECU 12.

A touch display 16 is also connected to the parking assist ECU 12. The touch display 16 is disposed in a certain position so that the vehicle driver can view and operate (for example, at a center of an instrument panel). When a shift lever is in a reverse position, the parking assist ECU 12 brings the touch display 16 to display the image taken by the camera 14, for example. Then, a rearward image of the vehicle is displayed on a screen of the touch display 16 in accordance with an instruction of the parking assist ECU 12. In addition, the touch display 16 displays a reference line, frame and the like for the parking assist control additionally on the image taken by the camera 14 in accordance with an instruction of the parking assist ECU 12.

A touch operation portion of a pressure-sensitive type, a warm-sensitive type and the like that can be operated by the driver is provided on the touch display 16. The touch operation portion includes a plurality of switches having a hierarchical structure and displayed on the screen in accordance with an instruction of the parking assist ECU 12. The parking assist ECU 12 detects a touch operation conducted by the driver on the touch operation portion and performs a procedure in response to that operation conducted on the touch operation portion. The touch operation portion includes a switch for starting a garage parking mode, a switch for starting a parallel parking mode, an arrow button switch for setting a target parking position in which the driver parks the vehicle, and the like.

An electrical power steering system 18 (hereinafter called EPS) is further connected to the parking assist ECU 12. The EPS 18 includes a torque sensor for detecting a steering torque applied to a steering shaft by a steering operation of the vehicle driver, a steering angle sensor for detecting a steering angle of the steering shaft, and an electric motor for applying a torque to the steering shaft. The EPS 18 generates a torque in the electric motor so that the steering torque produced upon the steering operation by the driver can be assisted. At the same time, the EPS 18 generates the torque in the electric motor for steering the vehicle without the steering operation of the driver at the garage parking and the parallel parking along with the parking assist control (to be mentioned later).

The EPS 18 supplies the detected steering information of the steering shaft to the parking assist ECU 12. The parking assist ECU 12 supplies a target steering angle required for the steering shaft to the EPS 18 during the implementation of the parking assist control (to be mentioned later). The EPS 18 generates the torque required for the parking assist control in the electric motor after receiving the information of the target steering angle from the parking assist ECU 12.

The parking assist ECU 12 includes a memory 20. The memory 20 stores the information of the target parking position set by the driver and the calculated traveling locus to the target parking position (to be mentioned later). The information stored in the memory 20 is generally deleted when the parking assist control is completed, i.e., a shift lever is shifted to a parking position, neutral position and the like from the reverse position, or the vehicle approaches to the target parking position.

An operation of the parking assist apparatus 10 of the present embodiment is explained as follows.

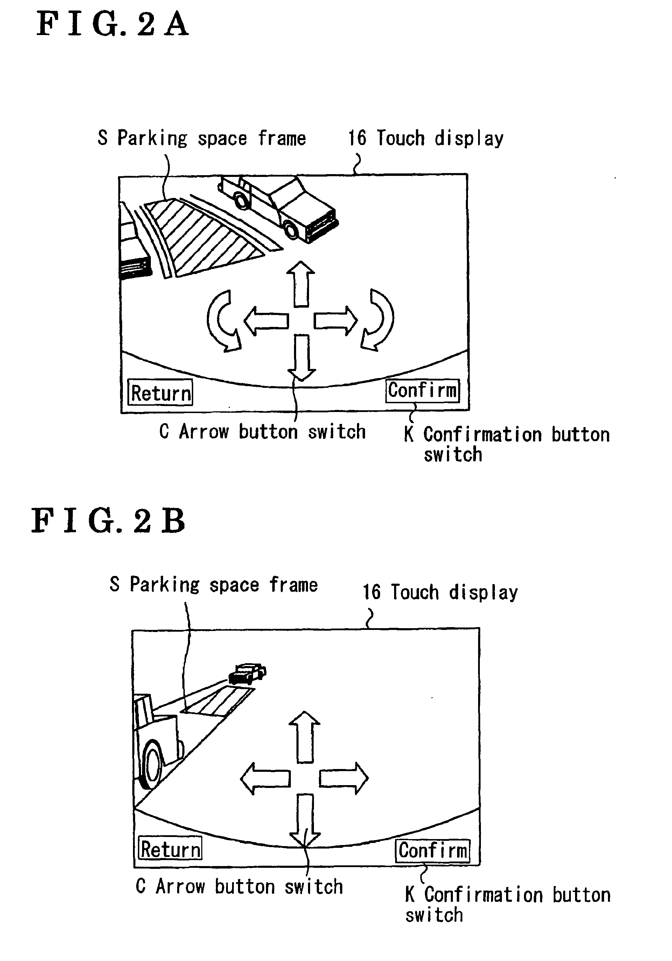

Fig. 2A is a view showing an image displayed on the screen of the touch display 16 when the target parking position for the garage parking is set in the parking assist apparatus 10. Fig. 2B is a view showing an image displayed on the screen of the touch display 16 when the target parking position for the parallel parking is set in the parking assist apparatus 10 of the present embodiment.

When the shift lever of the vehicle is shifted to the reverse position, the rearward image of the vehicle taken by the camera 14 is displayed on the screen of the touch display 16. At this time, in addition, the switches for starting the garage parking mode and the parallel parking mode both appear on the screen.

When the garage parking mode switch is operated by a touch operation in the aforementioned state, a frame S (hereinafter called "parking space frame") into which the vehicle should be parked on the road by the garage parking, and an arrow button switch C for moving and rotating the parking space frame S are both displayed on the screen of the touch display 16 as shown in Fig. 2A while the rearward image of the vehicle taken by the camera 14 is displayed on the screen.

In this case, the arrow button switch C includes an upward switch for moving the parking space frame S away from the vehicle on the road, a downward switch for moving the parking space frame S toward the vehicle, a leftward switch for moving the parking space frame S in the leftward direction, a rightward switch for moving the parking space frame S in the rightward direction, a counterclockwise switch for rotating the parking space frame S in the counterclockwise direction, and a clockwise switch for rotating the parking space frame S in the clockwise direction. The parking space frame S can be moved in four directions and rotated with respect to a center thereof.

When the parallel parking mode switch is operated by touching on the screen of the touch display 16, the parking space frame S for showing the target parking position into which the vehicle should be parked on the road by the parallel parking and the arrow button switch C are both displayed on the screen as shown in Fig. 2B while the rearward image of the vehicle taken by the camera 14 is displayed on the screen.

In this case, the arrow button switch C includes the aforementioned upward switch, the downward switch, the leftward switch, and the rightward switch without the counterclockwise switch or the clockwise switch. In the parallel parking, the parking space frame S can be moved in four directions but not be rotated with respect to the center thereof. That is, the vehicle is only moved in a longitudinal direction and a transverse direction.

The parking space frame S has a rectangular shape on the actual road substantially corresponding to a dimension of the vehicle. However, on the screen, the parking space frame S is in a shape in accordance with a position on the screen. In addition, each time the arrow button switch C is operated by the touch operation of the driver, the parking space frame S is moved by X cm (5cm, for example) or rotated by Y° (1° , for example) on the actual road. In this case, the more the parking space frame S is close to the vehicle, the greater the moving amount of the parking space frame S is on the screen of the touch display 16 by the touch operation due to a perspective relation in the vehicle rearward image taken by the camera 14.

When the parking space frame S and the arrow button switch C are displayed on the screen of the touch display 16, the traveling locus from an initial position, which is regarded as the present vehicle position at that time, to the target parking position specified based on the position of the parking space frame S is calculated per predetermined period (for example, 2ms).

When the garage parking mode switch or the parallel parking mode switch is operated by touching, a confirmation button switch K for confirming a setting of the target parking position by the parking space frame S is displayed together with the parking space frame S and the arrow button switch C on the screen. When the confirmation button switch K is operated with the traveling locus to the target parking position being generated, the setting of the target parking position is fixed and the automatic steering is permitted by the parking assist control subsequently.

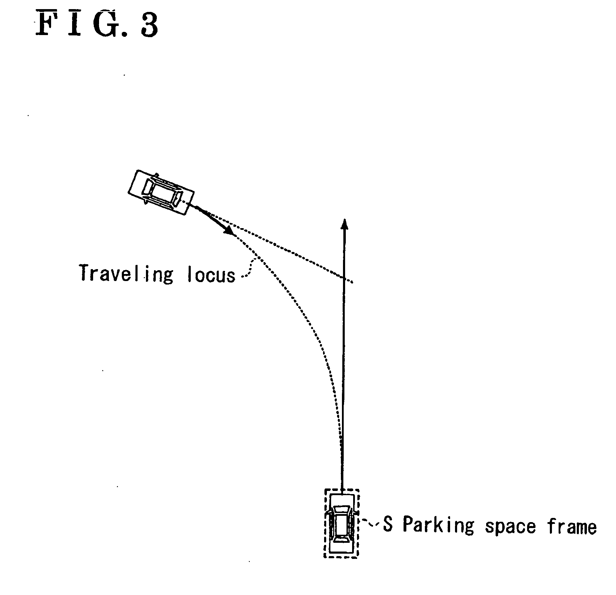

Fig. 3 is a view showing the traveling locus to the target parking position at the garage parking. In the garage parking mode, the traveling locus to the target parking position is calculated based on a relative position relation between the present vehicle position and the target parking position so that 1: straight reverse interval of a predetermined distance Z1, 2: steering angle maximizing interval, 3: fixed interval of the steering angle, 4: steering angle minimizing (i.e. returning) interval, and 5: straight reverse interval of a predetermined distance Z2 are appropriately formed as the traveling locus in case that a predetermined geometric position condition determined by a minimum turning radius of the vehicle and the relative position relation between the present vehicle position and the target parking position is satisfied.

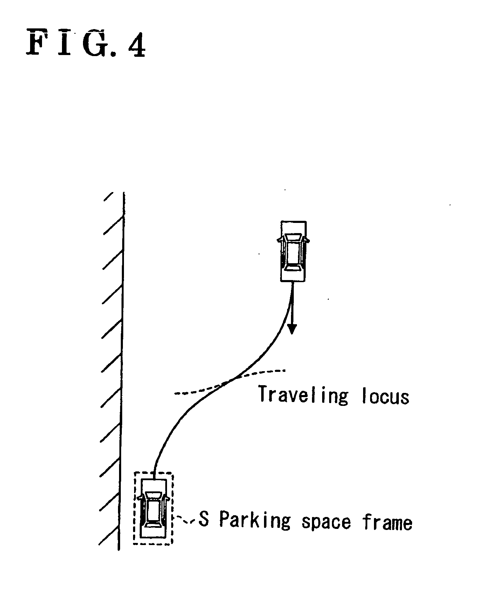

Fig. 4 is a view showing the traveling locus to the target parking position at the parallel parking. In the parallel parking mode, the traveling locus to the target parking position is calculated based on the relative position relation between the present vehicle position and the target parking position so that two circles in contact with each other as the traveling locus are appropriately formed in case that the predetermined geometric position condition determined by the minimum turning radius of the vehicle and the relative position relation between the present vehicle position and the target parking position is satisfied.

When the traveling locus to the target parking position is calculated and generated in the garage parking mode or the parallel parking mode, the information of the traveling locus and the target parking position is stored in the memory 20. At the same time, the inside of the parking space frame S becomes colored with green, for example, thereby showing that the parking assist control can be conducted. When the confirmation button switch K on the touch display 16 is operated by touching under the condition that the traveling locus to the target parking position is generated by calculation and the inside of the parking space frame S is colored with green, for example, the arrow button switch C and the confirmation button switch K become not displayed on the screen of the touch display 16.

Whereas, when the traveling locus to the target parking position is not generated due to the relative position relation between the present vehicle position and the target parking position and the like, the inside of the parking space frame S becomes colored with red, for example, thereby showing that the parking assist control is not able to be conducted. At this time, the arrow button switch C and the confirmation button switch K are kept displayed on the screen for urging the driver to change the target parking position.

When the vehicle starts reversing by a creep force and the like caused by the driver canceling the brake operation in a state in which the traveling locus to the target parking position is generated, the traveling amount of the vehicle is calculated subsequently. The vehicle position relative to the generated traveling locus is calculated based on the calculated traveling amount of the vehicle and the steering angle information from the EPS 18. In addition, the target steering angle for moving the vehicle along the generated traveling locus is calculated. The calculated target steering angle is supplied to the EPS 18. The EPS 18 generates the torque in the electric motor for rotating the steering shaft based on the target steering angle obtained from the parking assist ECU 12 so that the vehicle is guided along the generated traveling locus.

According to the above structure of the parking assist apparatus 10, the parking assist control for automatically steering the vehicle along the traveling locus to the target parking position being set by the vehicle driver can be performed at the garage parking and the parallel parking. With the implementation of the parking assist control, the vehicle driver is not required to conduct the steering operation when parking the vehicle in the target parking position. Thus, a burden of the steering operation of the driver may be reduced during the garage parking and the parallel parking according to the parking assist apparatus 10 of the present embodiment.

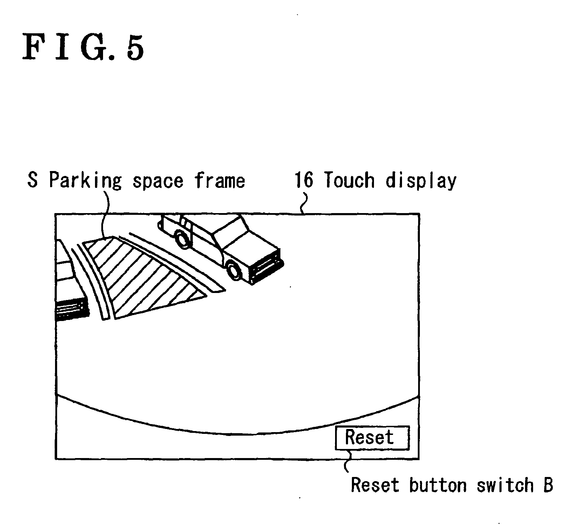

Fig. 5 is a view showing the image displayed on the screen of the touch display 16 when the vehicle moves along the traveling locus to the target parking position. Fig. 5 shows the image produced when the vehicle is guided in the garage parking mode. The similar image is shown on the screen of the touch display 16 when the vehicle is guided in the parallel parking mode.

When the vehicle starts reversing in a state in which the traveling locus to the target parking position is generated, the traveling amount of the vehicle is calculated and also a reset button switch B is displayed on the screen of the touch display 16 as shown in Fig. 5. The reset button switch B is provided for changing the target parking position presently set to the other position. That is, resetting of the target parking position can be achieved by the reset button switch B. The reset button switch B is desirably effective only when the vehicle is in a stopped state.

When the reset button switch B is not operated by touching, the parking assist control is performed in accordance with the information of the traveling locus and the target parking position stored in the memory 20 at that time. Whereas, when the reset button switch B is operated by touching, the arrow button switch C, the parking space frame S with no color, and the confirmation button switch K are again displayed on the screen of the touch display 16 as shown in Figs. 2A and 2B. Then, the traveling locus from the initial position, which is regarded as the present vehicle position at that time, to the target parking position specified based on the position of the parking space frame S is calculated per predetermined period.

The calculation of the traveling locus to the target parking position at the resetting is performed based on the steering angle at the resetting and the relative position relation between the present vehicle position and the target parking position in case that the position condition for calculating the traveling locus at the resetting is different from that at the initial setting. Then, the procedure in response to whether the traveling locus is generated or not is performed, which is the same condition as in the initial setting. Each time the reset button switch B is operated by touching, the same procedure is conducted afterwards.

According to the above-mentioned embodiment, when the reset button switch B is operated to perform the resetting of the target parking position, the calculation of the traveling locus to the target parking position is again conducted, i.e. a new traveling locus to a new target parking position is calculated. In this case, if the calculation of the traveling locus is constantly performed and thus the parking assist control is performed based on the calculated traveling locus even though the new target parking position is placed in the vicinity of the previous target parking position (for example, a position difference therebetween is 30cm), the traveling locus is calculated despite the fact that the traveling loci before and after the resetting are substantially similar to each other. Then, the calculation burden may be increased and also the parking assist control may not be promptly performed due to that calculation. Therefore, in such a case, it is appropriate to perform the parking assist control using the traveling locus being generated at a time immediately before the resetting is performed when the target parking positions before and after the resetting are substantially similar to each other.

The traveling locus may not be generated due to the restriction on the calculation of the traveling locus even in a state in which the vehicle is positioned on the same traveling locus as the previous traveling locus after the resetting of the target parking position is performed and also the target parking position is exactly same as that being set at a time immediately before the resetting. Further, the target parking position is set via the arrow button switch C on the screen of the touch display 16 as mentioned above. In this case, the actual traveling amount of the vehicle per operation of the arrow button switch C is very small In addition, the size and the position of the parking space frame S on the screen of the touch display 16 are largely different between the cases of the initial setting and the resetting of the target parking position. Therefore, it may be impossible to completely bring the new target parking position identical to the previous target parking position via the arrow button switch C. Then, the traveling locus is possibly not generated due to the position deviation between the new target parking position and the previous target position. If the information of the traveling locus being generated at a time immediately before the driver performs the resetting is already deleted from the memory 20, the parking assist control may not be performed even if the driver desires to continue the parking assist control based on the traveling locus being generated at a time immediately before the resetting is performed.

Therefore, according to the present embodiment, the information of the target parking position and the traveling locus thereto being set at a time immediately before the resetting is performed is maintained in the memory 20 even after the target parking position is newly set. Then, the parking assist control may be continued based on the target traveling locus being set at a time immediately before the resetting.

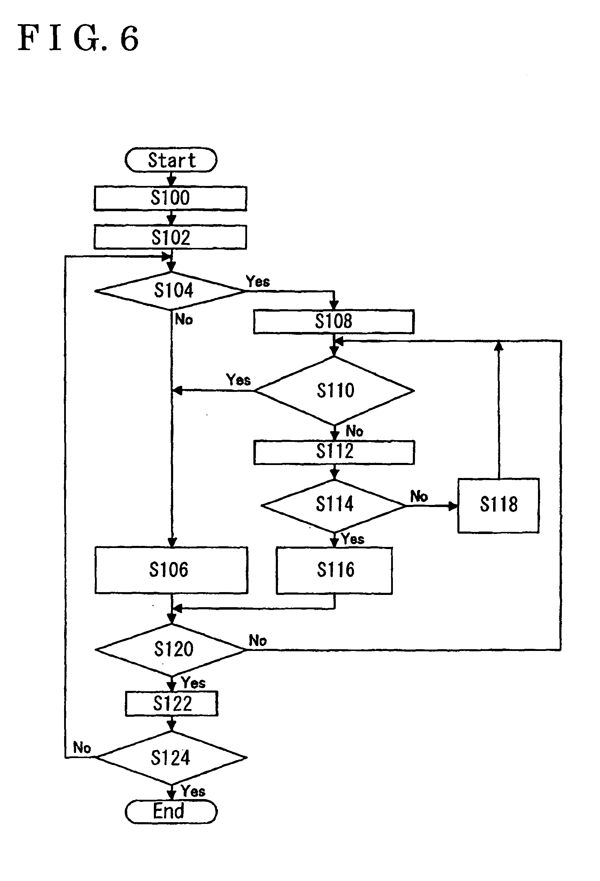

Fig. 6 is a flowchart showing an example of a control routine conducted by the parking assist ECU 12 in the garage parking mode and the parallel parking mode according to the present embodiment. The routine of Fig. 6 is repeatedly implemented each time the shift lever is shifted to the reverse position. When the routine of Fig. 6 is implemented, a process in Step 100 is first conducted.

In Step 100, the parking space frame S is moved by a touch operation on the arrow button switch C on the screen of the touch display 16 implemented by the vehicle driver, thereby performing the setting of the target parking position in which the vehicle is desired to be parked.

In Step 102, the traveling locus from the present vehicle position to the target parking position, which is set in Step 100, is calculated. In this case, the traveling locus generated by this calculation is the initial traveling locus as initially calculated after the garage parking mode or the parallel parking mode is activated. When the traveling locus is generated in Step 102, the process is proceeded to Step 104. Meanwhile, when the traveling locus is not generated in Step 102, the process for urging the driver to change the above target parking position is performed.

In Step 104, it is determined whether or not the target parking position is newly set through the touch operation on the reset button switch B on the screen of the touch display 16. When it is determined that the target parking position is not newly set, the process is proceeded to Step 106.

In Step 106, the initial traveling locus and the target parking position are set as the traveling locus required for the vehicle to move along and the target parking position immediately after the calculation of the initial traveling locus is performed. Alternatively, the traveling locus being generated at a time immediately before the resetting and the target parking position, which are stored in Step 108 (to be mentioned later), are set as the traveling locus required for the vehicle to move along and the target parking position after the reset button switch B is operated.

Whereas, when it is determined that the target parking position is newly set in Step 104, the process is proceeded to Step 108.

In Step 108, the information of the traveling locus being generated at a time immediately before the resetting of the target parking position, which is performed through the touch operation on the reset button switch B, and the target parking position is stored in the memory 20. That is, the information of the traveling locus being generated at a time immediately before the resetting is kept stored in the memory 20 within a buffer space so that the information of the traveling locus and the like is not deleted from the memory 20.

In Step 110, it is determined whether or not the newly set target parking position and the target parking position being set at a time immediately before the resetting, which is stored in Step 106, are positioned within a predetermined distance (30cm, for example). That is, it is determined whether or not both target parking positions are hardly separated from each other and thus substantially match to each other. If the positive determination is obtained, the process is proceeded to Step 106 in which the traveling locus being generated at a time immediately before the resetting, which is stored in Step 108, and the target parking position are set as the traveling locus required for the vehicle to move along and the target parking position. Meanwhile, if the negative determination is obtained, the process is proceeded to Step 112.

In Step 112, the traveling locus from the prevent vehicle position to the target parking position being newly set is calculated. Next, in Step 114, it is determined whether or not the traveling locus to the new target parking position calculated in Step 112 is generated. In this case, the traveling locus generated in Step 114 is that generated after at least second time of calculation after the garage parking mode or the parallel parking mode is activated. When it is determined that the traveling locus is generated, the process is proceeded to Step 116. Meanwhile, when it is determined that the traveling locus is not generated, the process is proceeded to Step 118.

In Step 116, the traveling locus generated by the calculation in Step 112 and the newly set target parking position are set as the traveling locus required for the vehicle to move along and the target parking position.

In Step 118, the fact that the traveling locus cannot be generated with the target parking position being newly set is informed to the vehicle driver. Precisely, the inside of the parking space frame S on the display 16 becomes colored with red, for example, and the vehicle drive is informed that the traveling locus cannot be generated with the newly set target parking position through the audio guidance. After completion of Step 118, the process for urging the driver to change the target parking position is performed subsequently and the process in Step 110 is repeated.

After the completion of Step 106 or Step 116, the process is proceeded to Step 120. In Step 120, it is determined whether or not the setting of the target parking position is fixed through the touch operation on the confirmation button switch K on the screen of the touch display 16. When it is determined that the target parking position is not fixed, the process is proceeded to Step 110. Meanwhile, when it is determined that the target parking position is fixed, the process is proceeded to Step 122.

In Step 122, the parking assist control is performed to automatically steer the vehicle by instructing the EPS 18 in accordance with the movement of the vehicle so that the vehicle moves along the traveling locus generated by the calculation in Step 106 or 116.

Next, in Step 124, it is determined whether or not the parking assist control is completed, i.e. the shift lever is shifted to the parking position and the like from the reverse position, or the vehicle approaches the target parking position. When it is determined that the parking assist control is not yet completed, the processes after Step 104 are performed. Meanwhile, when it is determined that the parking assist control is completed, the information stored in the memory 20 is deleted and the present routine is terminated.

According to the routine of Fig. 6, in case that the resetting of the target parking position is performed through the touch operation on the reset button switch B, the information of the target parking position and the traveling locus thereto being set at a time immediately before the resetting is not deleted immediately after the touch operation on the reset button switch B and is kept stored in the memory 20 until the traveling locus to the newly set target parking position is generated.

Therefore, if the traveling locus to the newly set target parking position is not generated due to the restriction on the calculation of the traveling locus when the target parking position is newly set, the information of the traveling locus to the target parking position being generated at a time immediately before the resetting, which is stored in the memory 20, can be read out. Thus, even after the resetting of the target parking position is performed through the touch operation on the reset button switch B, the parking assist control may be resumed and continued based on the traveling locus being generated at a time immediately before the resetting. The convenience of the vehicle drive may be improved.

In addition, according to the routine of Fig. 6, when a difference between the newly set target parking position and the previous target parking position is equal to or smaller than the predetermined distance after the target parking position is newly set by touch operation on the reset button switch B, the information of the traveling locus to the target parking position being generated at a time immediately before the resetting is kept stored in the memory 20. In addition, the traveling locus to the newly set target parking position is prohibited to be calculated.

When the target parking positions before and after the resetting are substantially same, the traveling locus on the actual road to the newly set target parking position may be hardly changed from the previous traveling locus as long as the vehicle is positioned on the traveling locus being generated before the resetting. Thus, in this case, the calculation of the traveling locus to the target parking position may not be necessary after the resetting. According to the parking assist apparatus 10 of the present embodiment, when the target parking positions before and after the resetting are hardly different from each other, the calculation burden caused by the resetting may be reduced. In addition, the information of the traveling locus to the previous target parking position can be read out immediately after the resetting, thereby promptly starting the parking assist control after the resetting based on the traveling locus to the target parking position.

Further, according to the routine of Fig. 6, when the traveling locus to the newly set target parking position is generated after the target parking position is newly set, the parking assist control is performed by switching the traveling locus from the traveling locus being generated before the resetting to that after the resetting. At this time, if the target parking position is changed by the intention of the vehicle driver even after the parking assist control is started based on the initially generated traveling locus to the target parking position, the parking assist control may be performed to park the vehicle along the new traveling locus to that target parking position being changed.

According to the aforementioned present embodiment, the traveling locus to the target parking position is calculated per predetermined time after the reset button switch B appearing on the screen of the touch display 16 is operated. However, the embodiment is not limited thereto and the traveling locus may be calculated each time the parking space frame S is shifted on the screen by touch operation on the button switch C. Alternatively, the traveling locus may be calculated only when a predetermined button switch is operated.

Further, according to the aforementioned present embodiment, only the automatic steering by the electric motor of the EPS 18 is performed as the parking assist control for guiding the vehicle to the target parking position along the traveling locus. However, the present embodiment is not limited thereto and the driving and stopping of the vehicle may be also automatically performed without the operation of the vehicle driver. Further, the operation of the vehicle driver may be assisted by indicating the reference line on the screen of the touch display 16 or an audio guidance.

According to the present embodiment, even after the resetting of the target parking position is performed, the information of the previous target parking position before the resetting may be read out unless the traveling locus to the newly set target parking position is generated. Therefore, the parking assist based on the traveling locus to the previous target parking position may be continued.

Further, according to the present embodiment, the information of the traveling locus being generated at a time immediately before the resetting may be promptly read out even after the resetting of the target parking position is conducted, thereby promptly starting the parking assist control based on the traveling locus to the target parking position.

A parking assist apparatus including a target parking position setting means for setting a target parking position in which a vehicle is desired to be parked by an operation on a display for a position setting appearing on an actual image that shows vehicle surroundings and a traveling locus calculating means for calculating a traveling locus to the target parking position set by the target parking position setting means for performing a parking assist to guide the vehicle along the traveling locus characterized in that the parking assist apparatus further comprises further includes a memory means for keeping storing an information of the traveling locus being generated at a time immediately before a resetting of the target parking position is performed until a new traveling locus to a new target parking position is generated by the calculation of the traveling locus calculating means under a condition that the parking assist is once started based on the traveling locus initially generated by the calculation of the traveling locus calculating means and when the resetting of

## Claims

1. A parking assist apparatus (10) comprising a target parking position setting means (12) for setting a target parking position in which a vehicle is desired to be parked by an operation on a display for a position setting appearing on an actual image that shows vehicle surroundings and a traveling locus calculating means (12) for calculating a traveling locus to the target parking position set by the target parking position setting means (12) for performing a parking assist to guide the vehicle along the traveling locus **characterized in that** the parking assist apparatus (10) further comprises:
a memory means (20) for keeping storing an information of the traveling locus being generated at a time immediately before a resetting of the target parking position is performed until a new traveling locus to a new target parking position is generated by the calculation of the traveling locus calculating means (12)
under a condition that the parking assist is once started based on the traveling locus initially generated by the calculation of the traveling locus calculating means (12) and when the resetting of the target parking position is performed by the target parking position setting means (12) before the vehicle reaches the target parking position being initially set.

2. A parking assist apparatus (10) according to claim 1, wherein the memory means (20) stores the information of the traveling locus being generated at a time immediately before the resetting is performed and an information of the target parking position being set at a time immediately before the resetting is performed.

3. A parking assist apparatus (10) according to claim 1, wherein when the traveling locus to the newly set target parking position is not generated by the calculation of the traveling locus calculating means (12) after the target parking position is newly set by the target parking position setting means (12), the parking assist is continued based on the traveling locus being generated at a time immediately before the resetting is performed, the traveling locus being stored in the memory means.

4. A parking assist apparatus (10) according to claim 2, wherein when the traveling locus to the newly set target parking position is not generated by the calculation of the traveling locus calculating means (12) after the target parking position is newly set by the target parking position setting means (12), the parking assist is continued based on the traveling locus being generated at a time immediately before the resetting is performed, the traveling locus being stored in the memory means (20).

5. A parking assist apparatus (10) according to claim 1, wherein the memory means (20) keeps storing the information of the traveling locus being generated at a time immediately before the resetting is performed when a difference between the target parking position newly set by the target parking position setting means (12) and the target parking position being set at a time immediately before the resetting is performed is equal to or smaller than a predetermined value.

6. A parking assist apparatus (12) according to claim 2, wherein the memory means (20) keeps storing the information of the traveling locus being generated at a time immediately before the resetting is performed when a difference between the target parking position newly set by the target parking position setting means (12) and the target parking position being set at a time immediately before the resetting is performed is equal to or smaller than a predetermined value.

7. A parking assist apparatus (10) according to claim 5, wherein when the difference between the newly set target parking position and the target parking position being set at a time immediately before the resetting is performed is equal to or smaller than the predetermined value after the resetting of the target parking position is performed by the target parking position setting means (12), the traveling locus to the newly set target parking position stops being calculated by the traveling locus calculating means (12) and the parking assist is continued based on the traveling locus being generated at a time immediately before the resetting is performed, the traveling locus being stored in the memory means (20).

8. A parking assist apparatus (10) according to claim 6, wherein when the difference between the newly set target parking position and the target parking position being set at a time immediately before the resetting is performed is equal to or smaller than the predetermined value after the resetting of the target parking position is performed by the target parking position setting means (12), the traveling locus to the newly set target parking position stops being calculated by the traveling locus calculating means (12) and the parking assist is continued based on the traveling locus being generated at a time immediately before the resetting is performed, the traveling locus being stored in the memory means (20).
